# EUROPÄISCHE PATENTSCHRIFT

(11) **EP 2 393 894 B1**
(45) Veröffentlichungstag und Bekanntmachung des Hinweises auf die Patenterteilung: **13.09.2017**
(21) Anmeldenummer: 10701846.7
(22) Anmeldetag: 22.01.2010
(51) Int. Cl.: C09J 5/02, C09K 3/18

(54) **LÖSUNG INSBESONDERE ZUR VORBEHANDLUNG EINES HYDROPHILEN UNTERGRUNDES ZUR VERBESSERUNG EINER VERKLEBUNG BEI FEUCHTEN UND NASSEN BEDINGUNGEN**
SOLUTION, IN PARTICULAR FOR PRETREATING A HYDROPHILIC SUBSURFACE IN ORDER TO IMPROVE AN ADHESIVE BOND UNDER HUMID AND WET CONDITIONS
SOLUTION DESTINÉE NOTAMMENT AU PRÉTRAITEMENT D'UN SUPPORT HYDROPHILE POUR AMÉLIORER L'ADHÉRENCE DANS DES CONDITIONS HUMIDES ET MOUILLÉES

(30) Priorität: 06.02.2009 DE 102009007930
(43) Veröffentlichungstag der Anmeldung: 14.12.2011
(73) Patentinhaber: tesa SE, 22848 Norderstedt (DE)
(72) Erfinder: KRAWINKEL, Thorsten, 22457 Hamburg (DE)
(86) Internationale Anmeldenummer: PCT/EP2010/050717
(87) Internationale Veröffentlichungsnummer: WO 2010/089205

(56) Entgegenhaltungen:
- EP-A1- 0 819 663
- WO-A1-99/46324
- DE-A1- 19 813 081
- US-A- 4 344 763

## Beschreibung

Die Erfindung betrifft eine Lösung und dessen Verwendung zur Vorbehandlung eines hydrophilen Untergrunds wie Glas, um die Haftung eines Klebemittels auf diesem Untergrund bei feuchten und nassen Bedingungen zu verbessern.

Für die Verklebung leichter Gegenstände im Haushalt werden häufig Klebebänder, Schmelzkleber oder Reaktivkleber verwendet. Da die Halteleistung auf festen Untergründen gegenüber spaltbaren Untergründen erhöht ist, wird, wenn möglich, auf Metall, Keramikfliesen oder Glas verklebt. Neben der Verwendung im Haushalt werden Klebemittel zur Verklebung von Glas, Metall etc. auch in der industriellen Produktion eingesetzt.

Die Oberflächen Keramik und Glas haben gemeinsam, dass sie als hydrophil eingestuft werden können. Hydrophile Untergründe besitzen die Eigenschaft, oftmals eine sehr dünne Schicht adsorbierten Wassers auf der Oberfläche gebunden zu haben, die erst bei sehr hohen Temperaturen entfernt werden kann. Diese Schicht kann besonders bei hoher Luftfeuchtigkeit oder Einwirkung von Wasser weiteres Wasser aufnehmen und dadurch die Verklebungsleistung bis hin zum vollständigen Versagen der Verklebung beeinträchtigen.

Die Reaktion von Klebern kann durch Feuchtigkeit inhibiert werden, wenn diese Kleber eine kovalente Bindung mit der Oberfläche ausbilden müssen, um ihre Funktion zu erfüllen.

Haftklebmassen basieren häufig auf Acrylaten, Naturkautschuk oder Styrolblockcopolymeren. Besonders Haftklebmassen für doppelseitige Klebebänder bestehen zumeist aus Acrylaten oder Styrolblockcopolymeren, wobei die Halteleistung bei den Acrylaten häufig etwas geringer ist. Gerade unter feuchten Bedingungen zeigen diese ein genau gegenläufiges Verhalten, Acrylathaftklebmassen sind deutlich weniger anfällig gegenüber Nässe und Feuchtigkeit als Blockcopolymermassen.
Auch der Aufbau der Klebebänder trägt zur Empfindlichkeit gegenüber Feuchtigkeit bei, so sind harte Klebmassen und Klebebänder mit starren Trägern häufig anfälliger als solche mit sehr flexiblen Trägern. Besonders doppelseitige Klebebänder mit Schaumstoffzwischenträger reagieren empfindlich auf Feuchtigkeit, wenn sie auf hydrophilen Untergründen verklebt werden.

Heißschmelzklebmassen bestehen aus Styrolblockcopolymeren oder aus Ethylenvinylacetat. Beide Arten der Heißschmelzkleber sind anfällig gegenüber Feuchtigkeit.

Industrielle Lösungen für das Problem des mangelhaften Haftuntergrundes sind bekannt. So werden auf Gläser vor einer Verklebung Haftvermittler aufgetragen, die die Oberfläche hydrophobieren und die genannte Wasserschicht damit eliminieren. Für die Hydrophobierung werden Organosilane eingesetzt. Am häufigsten finden dabei solche der allgemeinen Formel

(RO)₃Si-(CH₂)ₙ-X

Verwendung mit
R = CH₃ oder C₂H₅,
n = 3 bis 12 und
einer funktionellen Gruppe X.

Nach dem Aufbringen des Silans auf die hydrophile Oberfläche wird eine kovalente Bindung zwischen Oberfläche und Silan ausgebildet. Wenn die Oberfläche vollständig silanisiert wird, ist der oben beschriebene Wasserfilm entfernt und kann auch nicht mehr gebildet werden, so dass das Wasser nicht mehr die Möglichkeit hat, hinter die Verklebung zu laufen.

Dabei gibt es Silane, die mit Kleber und Oberfläche reagieren, und solche, die nur die Oberfläche hydrophobieren, um ein anschließendes Kleben zu erleichtern und den Klebeverbund zu verstärken. Beschrieben ist die Anwendung eines solchen Silans zum Beispiel in der WO 2005/040296 A1, in der ein Silan vor der Verklebung auf einen Haftklebstoff aufgebracht wird. Nach der Verklebung muss noch mindestens 24 Stunden gewartet werden, bis die Endverklebungsfestigkeit erreicht ist.

Weiterhin können diese Silane in reaktive und mäßig reaktive unterteilt werden. Reaktive Silane führen innerhalb von wenigen Minuten zu einer effektiven Hydrophobierung einer Oberfläche, ein Effekt, der mit mäßig reaktiven Silanen erst nach Stunden erreicht wird. Der Vorteil mäßig reaktiver Silane ist allerdings ihre hohe Lagerstabilität von mehr als sechs Monaten in Lösung. In die Gruppe der reaktiven Silane fällt zum Beispiel γ-Amino-propyl-triethoxysilan. 3-Glycidoxypropyltrimethoxysilan ist dahingegen als mäßig reaktiv einzustufen.

In der WO 2005/040296 A1 ist sodann die Anwendung einer Lösung von 3-Glycidoxypropyltrimethoxysilan zur Verbesserung der Verklebung von Acrylat-Klebemassen auf Glasoberflächen gezeigt. In dieser Anwendung wird der Kontakt zwischen Klebemasse und Oberfläche hergestellt, bevor das Lösungsmittel verdampft ist, um so eine kovalente Anbindung des Silans sowohl an die Glasoberfläche als auch an die Klebmasse zu erreichen. Nach der Herstellung des Kontakts muss 72 Stunden gewartet werden, bevor eine Belastung der Verklebung erfolgen kann.
Das in WO 2005/040296 A1 dargestellte Vorgehen ist akzeptabel, wenn die Wartezeit von 72 Stunden eingehalten werden kann. In vielen Fällen führt diese Wartezeit aber zu einer Verzögerung der Produktion. Soll weiterhin die Vorbehandlung der Oberfläche durch den Endverbraucher bei privaten Anwendungen vorgenommen werden, so ist eine Verkürzung der Wartezeit absolut notwendig. Der Einsatz eines reaktiven Silans wie zum Beispiel γ-Amino-propyl-triethoxysilan, das in DE 198 13 081 A1 beschrieben ist, stellt aber auch keine Lösung des Problems dar, da hier die Lagerbeständigkeit zu gering ist. Konsumerprodukte zum Beispiel liegen häufig recht lange im Verkaufsraum oder beim Kunden, bevor sie angewendet werden. Lagerzeiten von zwei Jahren zwischen Produktion und Verwendung sind keine Seltenheit.

Eine erste Verbesserung der Lagerstabilität ist mit einer Lösung insbesondere zur Vorbehandlung einer hydrophilen Oberfläche zur Hydrophobierung bekannt geworden, die in der WO 2008/052887 A1 offenbart ist. Die Lösung enthält ein Silan der Formel 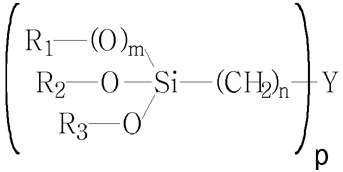 mit
R₁, R₂, R₃ unabhängig voneinander gewählt aus der Gruppe Methyl, Ethyl, 2-Methoxyethyl, i-Propyl
m = 0 oder 1
n = 0 bis 12
p = 1 oder 2
und für p = 1
   Y = einer funktionellen Gruppe gewählt aus der Gruppe Alkyl, Vinyl, Phenyl, Cyclobutyl, Cyclopentyl, Cyclohexyl, Glycidyl, Glycidyloxy, Isocyanato, Ureido, -CF₃, -(CF₂)_{q}CF₃ mit q = 1 bis 12, Cyanid, Halogenid, (Meth)acryl, (Meth)acryloxy, -NH-CH₂-CH₂-NR⁴R⁵, -NR⁴R⁵ (mit R⁴ und R⁵ unabhängig voneinander gewählt aus der Gruppe H, Alkyl, Phenyl, Benzyl, Cyclopentyl, Cyclohexyl)
   beziehungsweise
   für p=2
      Y = O, S, NH
   sowie eine Komponente enthaltend, die bewirkt, dass der pH-Bereich der einen hydrophilen Oberfläche um mindestens zwei Einheiten vom neutralen Bereich abweicht.

Aufgabe der Erfindung ist es, die Lagerfähigkeit eines hochreaktiven, also sehr schnell reagierenden Silans deutlich zu erhöhen, damit das Produkt länger angewendet werden kann.

Gelöst wird diese Aufgabe durch eine Lösung, wie sie im Hauptanspruch dargelegt ist. Gegenstand der Unteransprüche sind vorteilhafte Fortbildungen des Erfindungsgegenstandes. Des Weiteren betrifft die Erfindung Verwendungen der erfindungsgemäßen Lösung sowie ein Set mit der erfindungsgemäßen Lösung und einer Klebstofffolie.

Demgemäß betrifft die Erfindung eine Lösung insbesondere zur Vorbehandlung einer hydrophilen Oberfläche zur Hydrophobierung, bestehend aus

### I. mindestens einem Silan der Formel

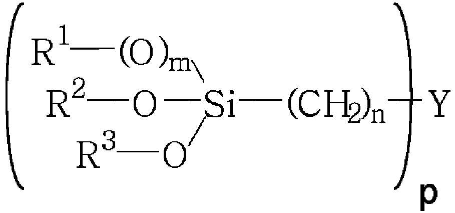

mit
R¹, R², R³ unabhängig voneinander gewählt aus der Gruppe Methyl, Ethyl, 2-Methoxyethyl, Propyl, i-Propyl, Butyl, Benzyl
m = 0 oder 1
n = 3 bis 12
p = 1 oder 2
und für p = 1 Y = einer funktionellen Gruppe gewählt aus der Gruppe (Meth)acryl, (Meth)acryloxy, Mercapto, Ureido, -NH-CH₂-CH₂-NR⁴R⁵, -NR⁴R⁵ (mit R⁴ und R⁵ unabhängig voneinander gewählt aus der Gruppe H, Alkyl, Phenyl, Benzyl, Cycloalkyl),
beziehungsweise
für p = 2
   Y = NH
sowie

### II. mindestens einem zweiten, die Alterungsstabilität erhöhenden Silan mit maximal zwei Kohlenstoffatomen in Kette an dem Siliziumatom gebunden.

Gemäß einer vorteilhaften Ausführungsform der Erfindung sind die Silane gelöst in einem nicht protischen Lösungsmittel oder einem Lösungsmittelgemisch, bei dem mindestens zu 30 Gew.-% ein nicht protisches Lösungsmittel vorhanden ist.

Das zweite Silan wird einzeln oder in beliebiger Kombination gewählt aus der Gruppe aus

II. Ol
a) einem Silan der Formel 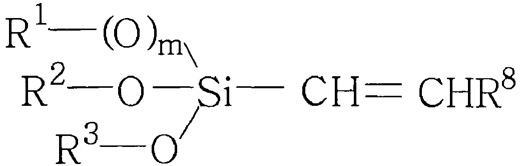 mit
   R⁸=H
   (damit sind zwei Kohlenstoffatome in Kette an dem Siliziumatom gebunden, also "n=2") und/oder
b) einem Silan mit der Formel 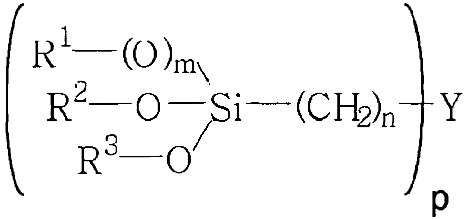 mit
   R¹, R², R³ unabhängig voneinander gewählt aus der Gruppe Methyl, Ethyl, 2-Methoxyethyl, Propyl, i-Propyl, Butyl, Benzyl
   m = 0 oder 1
   n = 1
   p = 1
   Y = NHR⁶, OR⁶, SR⁶ (mit R⁶ = H, Alkyl, Phenyl, Benzyl, C(X¹)-X²-R⁷ C(X¹)-R⁷ mit X¹ und X² unabhängig voneinander = O oder S und R⁷ = Alkyl, Phenyl oder Cycloalkyl)
   (damit ist ein Kohlenstoffatom in Kette an dem Siliziumatom gebunden, also "n=1 ")
   und/oder
c) einem Silan der Formel

   Si(OR⁹)₄

   mit R⁹ = Methyl, Ethyl, n-Propyl, Isopropyl, Butyl, Isobutyl, Benzyl, Phenyl
   (damit ist kein Kohlenstoffatom in Kette an dem Siliziumatom gebunden, also "n=1 ").

Weiter vorzugsweise hat die erfindungsgemäße Lösung eine Konzentration von jeweils 0,01 bis 8 Gew.-% der Silane in Summe, bevorzugt 0,1 bis 6 Gew.-%, besonders bevorzugt 0,5 bis 5 Gew.-%.

Weiter vorzugsweise liegt der Siedepunkt des Lösungsmittels beziehungsweise des -gemischs zwischen 35 °C und 180 °C, um ein zügiges Verdunsten nach dem Auftragen der Lösung auf der Oberfläche zu ermöglichen.

Es ist weiterhin vorteilhaft, wenn bei der Anwendung der erfindungsgemäßen Lösung keine besonderen Schutzmaßnahmen wie Handschuhe benötigt werden, weshalb möglichst ungefährliche Lösungsmittel bevorzugt eingesetzt werden wie zum Beispiel Carbonsäureester oder Ketone. Besonders bevorzugt sind Essigsäureethylester oder Essigsäurebutylester.

Beispiele für Silane der Gruppe I sind zum Beispiel Dynasilan DAMO, Dynasilan 1122, Dynasilan 1189, Dynasilan AMEO und Dynasilan MEMO der Firma Evonik. Silane der Gruppe IIa sind zum Beispiel Dynasilan VTEO, VTMO oder VTMOEO der Firma Evonik. Silane der Gruppe IIb können zum Beispiel von der Firma Wacker unter den Bezeichnungen Geniosil XL 924, 926 oder 973 erhalten werden. Die Silane der Gruppe IIc sind zum Beispiel als Dynasilan A, M oder P bei der Firma Evonik erhältlich.

Das Verhältnis der Silane der Gruppe I zu den Silanen der Gruppe II kann zwischen 1:10 und 10:1 Gewichtsanteilen schwanken, bevorzugt ist ein Verhältnis von 2:1 bis 1:4 besonders bevorzugt ein Verhältnis zwischen 1:1 und 1:3.

Besonders vorteilhaft sind auch Mischungen von Silanen aus I mit IIa und IIc.

Bevorzugt wird für die Silane der Gruppe II eine Mischung aus den Silanen IIa und IIc. Weiter vorzugsweise beträgt das Verhältnis zwischen IIa und IIc in diesem Fall 1:2 bis 4:1, weiter bevorzugt 1:1 bis 2:1.

Am Beispiel der Reaktion der Silane mit einer Glasoberfläche kann die Funktionsweise der erfindungsgemäßen Lösung erläutert werden. Die Reaktion der Silane mit der Glasoberfläche läuft in zwei Schritten ab. Zum einen müssen die Silane hydrolisiert werden, das heißt, die alkoholischen Gruppen RO werden abgespalten und durch Hydroxygruppen ersetzt. Die dadurch entstandenen Si-OH (Silanol)-Gruppen reagieren dann zum einen mit sich selbst, zum anderen mit den OH-Gruppen der Glasoberfläche, wodurch eine kovalente Bindung entsteht. Wenn die Glasoberfläche vollständig silanisiert wird, ist der oben beschriebene Wasserfilm entfernt und kann auch nicht mehr gebildet werden, so dass das Wasser nicht mehr die Möglichkeit hat, hinter die Verklebung zu laufen.

Überraschend einfach und für den Fachmann völlig unerwartet wird die gestellte Aufgabe, die Alterungsstabilität eines Silans zu erhöhen, durch eine Mischung, hergestellt mit einem zweiten Silan, gelöst.

Die Darreichungsform der erfindungsgemäßen Lösung ist besonders für die Anwendung im privaten Bereich durch den Endverbraucher von entscheidender Bedeutung. Bevorzugt sind hier die Abfüllung in Flaschen, Tuben oder Dosen zum Beispiel als Pumpspray oder als Aerosol beziehungsweise eine Abfüllung in Siegelrandbeuteln mit einem Vlies, einem Gewebe oder einem Schwamm. Solch ein Siegelrandbeutel besteht aus einer lösungsmittel- und wasserundurchlässigen Folie wie zum Beispiel einem Verbund aus PE/AI/PET. Diese Folie kann unter Einwirkung von Hitze verschweißt werden. In dem dadurch entstehenden Beutel befindet sich ein Tuch, am besten ein Vlies, das mit der Haftvermittlerlösung, bestehend zumindest aus den beiden Silanen und Lösungsmittel getränkt ist. Für die Anwendung kann der Endverbraucher den Beutel aufreißen, das getränkte Tuch entnehmen und damit seinen keramischen Untergrund, seine Kachel oder das Glas, auf dem verklebt werden soll, vorbehandeln.
Eine bevorzugte Darreichungsform ist außerdem die Abfüllung in Behälter enthaltend ein Reservoir und einen Applikator. Die Silanlösung wird hierbei durch Kontaktieren der Oberfläche mit dem Applikator aufgetragen.

Ganz besonders bevorzugt sind solche Verpackungen, bei denen Anwender mit den Lösungen auch während der Anwendung gar nicht in Kontakt kommen kann.
Beispielsweise können ein Vlies oder ein Schwamm in eine Verpackung derart integriert sein, dass sie sich an der freien Oberfläche der Verpackung befinden. In der Verpackung befindet sich zusätzlich die Lösung, die durch eine durchtrennbare Membran vom Vlies oder Schwamm getrennt ist oder die von einer Hülle umschlossen ist und auf diese Weise vom Vlies oder Schwamm getrennt ist.
Nach Durchtrennen der Membran oder der Zerstörung einer Hülle durch Druck, den der Verbraucher auf die Verpackung ausübt, wird das Vlies benetzt, indem die Lösung durch einen entsprechend geformten Kanal dem Vlies oder dem Schwamm zugeführt wird. Die Lösung durchdringt das freiliegende Vlies oder den Schwamm und kann mit denselben mit der hydrophilen Oberfläche in Kontakt gebracht werden, ohne dass der Anwender das Vlies oder den Schwamm berührt.

Optimalerweise geschieht die Reaktion auf der Oberfläche dann innerhalb weniger Minuten, so dass anschließend die Verklebung und auch die Belastung der Verklebung erfolgen können.

Bevorzugt in Kombination mit der Erfindung verwendbare Klebebänder sind hochelastische Klebstofffolien für wiederlösbare Verklebungen, die durch Ziehen in Richtung der Verklebungsebene wieder lösbar sind. Diese Klebstofffolien sind im Handel unter den Bezeichnungen "tesa Powerstrips"® und "tesa Posterstrips"® und "tesa Powerstrips System-Haken"®, ein so genannter Systemhaken mit Basisplatte und aufsteckbarem Dekorhaken, von der tesa AG erhältlich. Des Weiteren bietet die Firma 3M unter der Bezeichnung "Command Adhesive" ähnliche, auch durch Zug lösbare Klebstofffolien an, die aus einem Schaumstoffzwischenträger bestehen, auf den beidseitig Klebemassen aufgebracht sind.
Elastisch oder plastisch hochdehnbare Haftklebestreifen, welche sich durch dehnendes Verstrecken in der Verklebungsebene rückstands- und zerstörungsfrei wieder ablösen lassen, sind des Weiteren beispielsweise aus der US 4,024,312 A, DE 33 31 016 C2, WO 92/11332 A1, WO 92/11333 A1, DE 42 22 849 A1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 854 A1, WO 99/37729 A1 und DE 100 03 318 A1 bekannt.

### Prüfmethoden

Im Gegensatz zu der üblichen Prüfung zur Wasserresistenz einer Verklebung besonders im Bereich der Haftklebstoffe und Klebebänder wird kein Schältest vor und nach Wasserlagerung durchgeführt, da in diesem Falle die Klebung nicht belastet ist, das Wasser also deutlich schwieriger in die Verklebungsfuge eindringen kann.
Stattdessen wird ein Haken einer bestimmten Größe verklebt und mit einem bestimmten Gewicht belastet. Nun wird die Verklebung bei 35 °C und 85 % r.F. gelagert und in Abständen von 24 Stunden mit Wasser beträufelt und die Haltedauer in Stunden notiert. Zur Kontrolle wird auch eine Verklebung ohne Haftvermittlerlösung durchgeführt.

Die folgenden Beispiele sollen dazu dienen, die Erfindung zu veranschaulichen, ohne sie einzuschränken zu wollen.

### Beispiele

### Herstellung der Haftvermittler

### Vergleichsbeispiel 1

1 g γ-Aminopropyltriethoxysilan (Dynasilan AMEO) werden in 99 g Ethanol (wasserfrei) gelöst. 1 mL dieser Lösung wird zusammen mit einem PP-Vlies von 6 cm x 12 cm Fläche in einen Aluminium beschichteten Siegelrandbeutel gegeben und verschweißt.

### Vergleichsbeispiel 2

1 g γ-Aminopropyltriethoxysilan (Dynasilan AMEO) werden in 99 g Butylacetat gelöst. 1 mL dieser Lösung wird zusammen mit einem PP-Vlies von 6 cm x 12 cm Fläche in einen Aluminium beschichteten Siegelrandbeutel gegeben und verschweißt.

### Beispiel 3

1 g γ-Aminopropyltriethoxysilan (Dynasilan AMEO) und 2 g Vinyltrimethoxysilan (Dynasilan VTMO) werden in 97 g Butylacetat gelöst. 1 mL dieser Lösung wird zusammen mit einem PP-Vlies von 6 cm x 12 cm Fläche in einen Aluminium beschichteten Siegelrandbeutel gegeben und verschweißt.

### Beispiel 4

1 g Dynasilan AMMO, 2 g Dynasilan VTMO und 1g Tetraethylotrthosilikat der Firma Aldrich werden in einer Mischung aus 46 g Ethanol und 50 g Ethylacetat gelöst. 1 mL dieser Lösung wird zusammen mit einem PP-Vlies von 6 cm x 12 cm Fläche in einen Aluminium beschichteten Siegelrandbeutel gegeben und verschweißt.

### Beispiel 5

1 g Dynasilan MEMO und 2 g Geniosil XL 926 (N-Cyclohexylaminomethyl)triethoxysilan) werden in 97 g Ethylacetat gelöst. 1 mL dieser Lösung wird zusammen mit einem PP-Vlies von 6 cm x 12 cm Fläche in einen Aluminium beschichteten Siegelrandbeutel gegeben und verschweißt.

Zur Untersuchung der Lösungen werden jeweils zwei Beutel von jeder Lösung geöffnet und mit jedem getränkten Vlies eine Keramikkachel mit einer glatten Glasierung bestrichen. Nach einer Wartezeit von 15 min wird auf die vorbehandelte Kachel zum einen ein doppelseitiges Acrylatfix, tesa® 4952 (ein doppelseitiges Klebeband mit einem Schaumstoffträger und einer alterungsbeständigen Acrylatklebemasse mit einer Dicke von 1,2 mm und einer Klebkraft auf Stahl von 14 N / 25 mm), in einer Größe von 50 mm x 19 mm, zum anderen drei Powerstrips® Large der Firma tesa (doppelseitig klebende, trägerlose, einzeln eingesiegelte Stanzlinge mit einer Klebemasse basierend auf Synthesekautschuk mit einer Dicke von 0,65 mm und einer Klebkraft auf Stahl von 74,0 N / 25mm) geklebt. Letztere sind ausführlich beschrieben in der DE 33 31 016 C2, DE 42 22 849 A1, DE 42 33 872 A1, DE 44 31 914 A1, DE 195 37 323 A1, DE 197 08 364 A1, DE 197 29 706 und DE 100 33 399 A1.
Auf die Klebemittel wird mit einem Druck von 100 N eine gesäuberte Stahlbasisplatte verklebt, die so aufgebaut ist, dass ein Hakenkörper mit einem senkrecht abstehenden Stab aus Metall aufgesetzt werden kann. Die Kacheln werden senkrecht befestigt, und an den Haken werden im Abstand von 50 mm ein Gewicht von 200 g beim Acrylatfix und 1 kg beim Powerstrip gehängt. Nach einer Wartezeit von 10 Minuten wird Wasser (2 mL) oben auf die Verklebung geträufelt. Diese Benetzung wird alle 24 Stunden wiederholt. Gemessen wird die Zeit in Stunden, nach der der Haken von der Wand fällt. Als Vergleich werden Haken ohne Haftvermittler aufgehängt.
Dieser Versuch wird mit Frischmustern und gelagerten Beuteln (3 Monate bei 40 °C) durchgeführt. Die Ergebnisse sind Tabelle 1 zu entnehmen.

**Tabelle 1:**

| | Vergleichsbeispiel 1 | Vergleichsbeispiel 2 | Beispiel 3 | Beispiel 4 | Beispiel 5 | Ohne Haftvermittler |
|---|---|---|---|---|---|---|
| Frische Lösung Acrylatfix | > 500 h | >500 h | > 500 h | > 500 h | > 500 h | 1 h |
| Frische Lösung Powerstrips | > 500 h | >500 h | > 500 h | > 500 h | > 500 h | < 1 h |
| Gelagerte Lösung Acrylatfix | 2 h | 5 h | > 500 h | > 500 h | > 500 h | |
| Gelagerte Lösung Powerstrips | <1 h | 3 h | > 500 h | > 500 h | > 500 h | |

Es zeigt sich, dass nur mit einer geeigneten, erfindungsgemäß erzielten Kombination mindestens zweier Silane wie oben beschrieben eine gute Lagerstabilität gegeben ist.

## Patentansprüche

1. Lösung insbesondere zur Vorbehandlung einer hydrophilen Oberfläche zur Hydrophobierung, bestehend aus
I. mindestens einem Silan der Formel 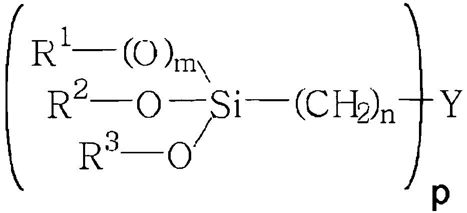 mit
R¹, R², R³ unabhängig voneinander gewählt aus der Gruppe Methyl, Ethyl, 2-Methoxyethyl, Propyl, i-Propyl, Butyl, Benzyl
m = 0 oder 1
n = 3 bis 12
p = 1 oder 2
und für p = 1
Y = einer funktionellen Gruppe gewählt aus der Gruppe (Meth)acryl, (Meth)acryloxy, Mercapto, Ureido, -NH-CH₂-CH₂-NR⁴R⁵, -NR⁴R⁵ (mit R⁴ und R⁵ unabhängig voneinander gewählt aus der Gruppe H, Alkyl, Phenyl, Benzyl, Cycloalkyl),
beziehungsweise
für p = 2 Y = NH
und
II. mindestens einem zweiten, die Alterungsstabilität erhöhenden Silan mit höchstens zwei Kohlenstoffatomen in Kette an das Silizium gebunden, wobei das zweite Silan einzeln oder in beliebiger Kombination gewählt wird aus der Gruppe aus
a) einem Silan der Formel 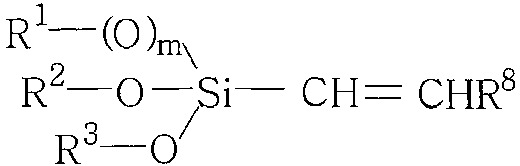 mit
R⁸ = H
und/oder
b) einem Silan mit der Formel 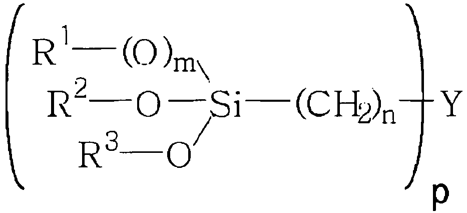 mit
R¹, R², R³ unabhängig voneinander gewählt aus der Gruppe Methyl, Ethyl, 2-Methoxyethyl, Propyl, i-Propyl, Butyl, Benzyl
m = 0 oder 1
n = 1
p = 1
Y = NHR₆, OR⁶, SR⁶ (mit R⁶ = H, Alkyl, Phenyl, Benzyl, C(X¹)-X²-R⁷, C(X¹)-R⁷ mit X¹ und X² unabhängig voneinander = O oder S und R⁷ = Alkyl, Phenyl oder Cycloalkyl)
und/oder
c) einem Silan der Formel
Si(OR⁹)₄
mit R⁹ = Methyl, Ethyl, n-Propyl, Isopropyl, Butyl, Isobutyl, Benzyl, Phenyl.

2. Lösung nach Anspruch 1, **dadurch gekennzeichnet, dass** die Silane gelöst sind in einem nicht protischen Lösungsmittel oder einem Lösungsmittelgemisch, bei dem mindestens zu 30 Gew.-% ein nicht protisches Lösungsmittel vorhanden ist.

3. Lösung nach Anspruch 1 oder 2,
**dadurch gekennzeichnet, dass**
die Silane in Summe in einer Konzentration von 0,01 bis 8 Gew.-%, bevorzugt 0,1 bis 6 Gew.-%, besonders bevorzugt 0,5 bis 5 Gew.-% in dem Lösungsmittel oder Lösungsmittelgemisch vorliegen.

4. Lösung nach zumindest einem der Ansprüche 1 bis 3,
**dadurch gekennzeichnet, dass**
sich das Lösungsmittel mindestens zu 30 Gew.-% aus Carbonsäureestern zusammensetzt.

5. Lösung nach zumindest einem der vorherigen Ansprüche,
**dadurch gekennzeichnet, dass**
das Lösungsmittel einen Siedepunkt zwischen 35 °C und 180 °C besitzt.

6. Lösung nach zumindest einem der vorherigen Ansprüche,
**dadurch gekennzeichnet, dass**
sich in der Lösung Silane der Formel I, IIa und IIc befinden.

7. Lösung nach zumindest einem der vorherigen Ansprüche,
**dadurch gekennzeichnet, dass**
für die Silane der Gruppe II eine Mischung aus den Silanen IIa und IIc eingesetzt wird, wobei vorzugsweise das Verhältnis zwischen IIa und IIc in diesem Fall 1:2 bis 4:1 beträgt, weiter bevorzugt 1:1 bis 2:1.

8. Lösung nach zumindest einem der vorherigen Ansprüche,
**dadurch gekennzeichnet, dass**
diese als Pumpspray oder als Aerosol vorliegt.

9. Lösung nach zumindest einem der vorherigen Ansprüche,
**dadurch gekennzeichnet, dass**
diese in ein Vlies, ein Gewebe oder einen Schwamm enthaltende Siegelrandbeuteln abgefüllt ist.

10. Lösung nach zumindest einem der vorherigen Ansprüche,
**dadurch gekennzeichnet, dass**
diese in Behältern enthaltend ein Reservoir und einen Applikator abgefüllt ist und berührungslos aufgetragen werden kann.

11. Lösung nach zumindest einem der vorherigen Ansprüche,
**dadurch gekennzeichnet, dass**
sich die Lösung in einer Verpackung befindet, in die ein Vlies oder ein Schwamm derart integriert sind, dass sie sich an der freien Oberfläche der Verpackung befinden, wobei die Lösung durch eine durchtrennbare Membran vom Vlies oder vom Schwamm getrennt ist oder die von einer Hülle umschlossen ist und auf diese Weise vom Vlies oder Schwamm getrennt ist.

12. Verwendung der Lösung nach zumindest einem der vorherigen Ansprüche zur Hydrophobierung hydrophiler Oberflächen zur Verbesserung der Lebensdauer einer adhäsiven Klebverbindung einer Klebmasse auf der Oberfläche unter Feuchtigkeitseinfluss und Nässe.

13. Verwendung der Lösung nach zumindest einem der vorherigen Ansprüche zur Hydrophobierung hydrophiler Oberflächen und anschließender Verklebung einer durch Ziehen in Richtung der Verklebungsebene beschädigungslos wieder lösbaren Klebstofffolie mit einer Klebmasse auf Basis von Polymeren und/oder Copolymeren aus Synthesekautschuk und/oder Naturkautschuk.

14. Set aus einer Lösung nach zumindest einem der vorherigen Ansprüche und einer Klebstofffolie zum Befestigen eines Gegenstandes, wobei die Klebstofffolie mit einer Klebmasse auf Basis von Polymeren und/oder Copolymeren aus Synthesekautschuk und/oder Naturkautschuk durch Ziehen in Richtung der Verklebungsebene beschädigungslos wieder lösbar ist.

## Claims

1. Solution particularly for the pretreatment of a hydrophilic surface for hydrophobizing, consisting of
I. at least one silane of the formula 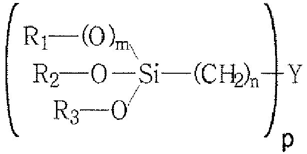 with
R¹, R², R³ independently of one another selected from the group of methyl, ethyl, 2-methoxyethyl, propyl, isopropyl, butyl, benzyl
m = 0 or 1
n = 3 to 12
p = 1 or 2
and for p = 1
Y = a functional group selected from the group of (meth)acryloyl, (meth)acryloyloxy, mercapto, ureido, -NH-CH₂-CH₂-NR⁴R⁵, -NR⁴R⁵ (with R⁴ and R⁵ independently of one another selected from the group of H, alkyl, phenyl, benzyl, cycloalkyl),
or
for p = 2
Y = NH
and
II. at least one second, aging stability enhancing silane having not more than two carbon atoms in chain attached to the silicon, wherein
the second silane individually or in any desired combination is selected from the group of
a) a silane of the formula 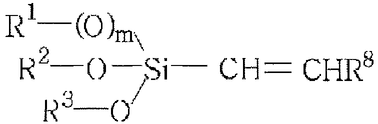 with
R⁸ = H,
and/or
b) a silane having the formula 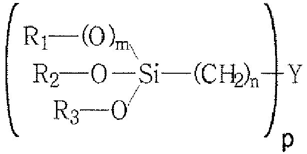 with
R¹, R², R³ independently of one another selected from the group of methyl, ethyl, 2-methoxyethyl, propyl, isopropyl, butyl, benzyl
m = 0 or 1
n = 1
p = 1
Y = NHR₆, OR⁶, SR⁶ (with R⁶ = H, alkyl, phenyl, benzyl, C(X¹)-X²-R⁷, C(X¹)-R⁷ with X¹ and X² independently of one another = 0 or S and R⁷ = alkyl, phenyl or cycloalkyl)
and/or
c) a silane of the formula
Si(OR⁹)₄
with R⁹ = methyl, ethyl, n-propyl, isopropyl, butyl, isobutyl, benzyl, phenyl.

2. Solution according to Claim 1, **characterized in that** the silanes are in solution in a nonprotic solvent or in a solvent mixture in which a nonprotic solvent is present at not less than 30% by weight.

3. Solution according to Claim 1 or 2,
**characterized in that**
the silanes in total are present in a concentration of 0.01% to 8% by weight, preferably 0.1% to 6% by weight, more preferably 0.5% to 5% by weight in the solvent or solvent mixture.

4. Solution according to at least one of Claims 1 to 3,
**characterized in that**
the solvent is composed at least to an extent of 30% by weight of carboxylic esters.

5. Solution according to at least one of the preceding claims,
**characterized in that**
the solvent possesses a boiling point between 35°C and 180°C.

6. Solution according to at least one of the preceding claims,
**characterized in that**
the solution comprises silanes of the formula I, IIa, and IIc.

7. Solution according to at least one of the preceding claims,
**characterized in that**
for the silanes of group II a mixture of the silanes IIa and IIc is used, the ratio between IIa and IIc in this case being preferably 1:2 to 4:1, more preferably 1:1 to 2:1.

8. Solution according to at least one of the preceding claims,
**characterized in that**
it is present in the form of a pump spray or an aerosol.

9. Solution according to at least one of the preceding claims,
**characterized in that**
it has been dispensed into sealed-edge pouches containing a nonwoven or woven material or a sponge.

10. Solution according to at least one of the preceding claims,
**characterized in that**
it has been dispensed into containers containing a reservoir and an applicator and can be applied contactlessly.

11. Solution according to at least one of the preceding claims,
**characterized in that**
the solution is located in a pack into which a nonwoven material or a sponge have been integrated such that they are located on the free surface of the pack, the solution separate from the nonwoven material or from the sponge as a result of a severable membrane, or which is enclosed by an envelope and in this way is separate from the nonwoven material or sponge.

12. Use of the solution according to at least one of the preceding claims for hydrophobizing hydrophilic surfaces to improve the service life of an adhesive bond of an adhesive on the surface under the influence of moisture and wetness.

13. Use of the solution according to at least one of the preceding claims for hydrophobizing hydrophilic surfaces and subsequently bonding an adhesive sheet which is redetachable without damage by pulling in the direction of the bond plane and which comprises an adhesive based on polymers and/or copolymers of synthetic rubber and/or natural rubber.

14. Set comprising a solution according to at least one of the preceding claims and an adhesive sheet for fixing an article, the adhesive sheet, with an adhesive based on polymers and/or copolymers of synthetic rubber and/or natural rubber, being redetachable without damage by pulling in the direction of the bond plane.

## Revendications

1. Solution en particulier destinée au prétraitement d'une surface hydrophile pour l'hydrophobisation, constituée
I. d'au moins un silane de formule 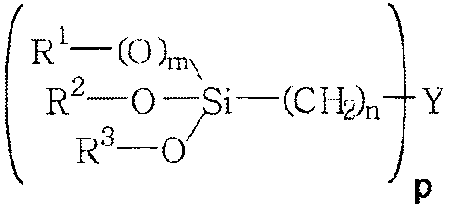 où
R¹, R², R³ sont choisis chacun indépendamment dans le groupe constitué par les groupes méthyle, éthyle, 2-méthoxyéthyle, propyle, isopropyle, butyle, benzyle,
m = 0 ou 1,
n = 3 à 12,
p = 1 ou 2
et pour p = 1
Y = un groupe fonctionnel choisi dans le groupe constitué par les groupes (méth)acryloyle, (méth)acryloxy, mercapto, uréido, -NH-CH₂-CH₂-NR⁴R⁵, -NR⁴R⁵ (où R⁴ et R⁵ sont choisis, indépendamment l'un de l'autre, dans le groupe constitué par H, alkyle, phényle, benzyle, cycloalkyle),
ou, respectivement,
pour p = 2
Y = NH
et
II. d'au moins un deuxième silane augmentant la tenue au vieillissement, ayant dans la chaîne au maximum deux atomes de carbone liés au silicium,
le deuxième silane étant choisi, individuellement ou en association quelconque, dans le groupe constitué par
a) un silane de formule 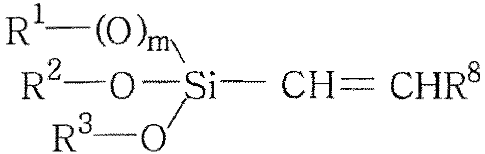 où
R⁸ = H,
b) un silane de formule 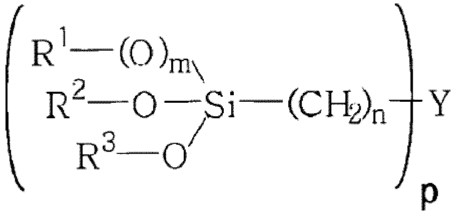 où
R¹, R², R³ sont choisis chacun indépendamment dans le groupe constitué par les groupes méthyle, éthyle, 2-méthoxyéthyle, propyle, isopropyle, butyle, benzyle,
m = 0 ou 1,
n = 1,
p = 1,
Y = NHR₆, OR⁶, SR⁶ (où R⁶ = H, un groupe alkyle, phényle, benzyle, C(X¹)-X²-R⁷, C(X¹)-R⁷ où X¹ et X² représentent indépendamment l'un de l'autre un atome d'oxygène ou de soufre et R⁷ = alkyle, phényle ou cycloalkyle)
et/ou
c) un silane de formule
Si(OR⁹)₄
où R⁹ = méthyle, éthyle, n-propyle, isopropyle, butyle, isobutyle, benzyle, phényle.

2. Solution selon la revendication 1, **caractérisée en ce que** les silanes sont dissous dans un solvant aprotique ou un mélange de solvants dans lequel un solvant aprotique est présent à raison d'au moins 30 % en poids.

3. Solution selon la revendication 1 ou 2, **caractérisée en ce que**
dans le solvant ou mélange de solvants les silanes sont présents au total à une concentration de 0,01 à 8 % en poids, de préférence de 0,1 à 6 % en poids, de façon particulièrement préférée de 0,5 à 5 % en poids.

4. Solution selon au moins l'une quelconque des revendications 1 à 3,
**caractérisée en ce que**
le solvant se compose à raison d'au moins 30 % en poids d'esters d'acides carboxyliques.

5. Solution selon au moins l'une quelconque des revendications précédentes,
**caractérisée en ce que**
le solvant présente un point d'ébullition compris entre 35 °C et 180 °C.

6. Solution selon au moins l'une quelconque des revendications précédentes,
**caractérisée en ce que**
des silanes de formules I, IIa et IIc se trouvent dans la solution.

7. Solution selon au moins l'une quelconque des revendications précédentes,
**caractérisée en ce que**
pour les silanes du groupe II on utilise un mélange des silanes IIa et IIc, en ce cas le rapport entre IIa et IIc valant de préférence de 1:2 à 4:1, encore mieux de 1:1 à 2:1.

8. Solution selon au moins l'une quelconque des revendications précédentes,
**caractérisée en ce que**
celle-ci se trouve sous forme d'aérosol ou de composition a pulvériser avec un atomiseur.

9. Solution selon au moins l'une quelconque des revendications précédentes,
**caractérisée en ce que**
celle-ci est introduite dans des sachets à bords scellés, contenant un non-tissé, un tissu ou une éponge.

10. Solution selon au moins l'une quelconque des revendications précédentes,
**caractérisée en ce que**
celle-ci est introduite dans des récipients contenant un réservoir et un applicateur et peut être appliquée sans contact.

11. Solution selon au moins l'une quelconque des revendications précédentes,
**caractérisée en ce que**
la solution se trouve dans un emballage dans lequel un non-tissé ou une éponge sont intégrés de manière à se trouver au niveau de la surface libre de l'emballage, la solution étant séparée du non-tissé ou de l'éponge par une membrane frangible ou étant entourée d'une enveloppe et étant de cette façon séparée du non-tissé ou de l'éponge.

12. Utilisation de la solution selon au moins l'une quelconque des revendications précédentes, pour l'hydrophobisation de surfaces hydrophiles dans le but d'améliorer la durée de vie d'un assemblage collé adhésif d'une matière adhésive sur la surface à l'humidité et sous l'effet de l'humidité.

13. Utilisation de la solution selon au moins l'une quelconque des revendications précédentes, pour l'hydrophobisation de surfaces hydrophiles et le collage subséquent d'un film d'adhésif redétachable sans endommagement par tirage en direction du plan de collage, comportant une matière adhésive à base de polymères et/ou copolymères à base de caoutchouc synthétique et/ou de caoutchouc naturel.

14. Ensemble constitué d'une solution selon au moins l'une quelconque des revendications précédentes et d'un film d'adhésif destiné à la fixation d'un article, le film d'adhésif qui comporte une matière adhésive à base de polymères et/ou copolymères à base de caoutchouc synthétique et/ou de caoutchouc naturel étant redétachable sans endommagement par tirage en direction du plan de collage.
